# EUROPÄISCHE PATENTSCHRIFT

(11) **EP 4 060 545 B1**
(45) Veröffentlichungstag und Bekanntmachung des Hinweises auf die Patenterteilung: **28.01.2026**
(21) Anmeldenummer: 21163778.0
(22) Anmeldetag: 19.03.2021
(51) Int. Cl.: G06F 21/78, G06F 12/14, G06F 21/86

(54) **ERMITTLUNG EINER AKTIVITÄT EINER VERSCHLÜSSELUNG EINES SPEICHERS**
DETERMINATION OF AN ACTIVITY OF AN ENCRYPTION OF A STORAGE DEVICE
DÉTERMINATION D'UNE ACTIVITÉ DE CRYPTAGE D'UNE MÉMOIRE

(43) Veröffentlichungstag der Anmeldung: 21.09.2022
(73) Patentinhaber: Siemens Mobility GmbH, 80997 München (DE)
(72) Erfinder: Falk, Rainer, 85586 Poing (DE); Feist, Christian Peter, 80689 München (DE); Seuschek, Hermann, 81373 München (DE); Zeschg, Thomas, 81543 München (DE)
(74) Vertreter: Siemens Patent Attorneys

(56) Entgegenhaltungen:
- EP-A1- 3 663 952
- US-A1- 2013 036 314
- US-A1- 2013 067 245

## Beschreibung

### HINTERGRUND DER ERFINDUNG

### Gebiet der Erfindung

Die vorliegende Erfindung betrifft ein Verfahren zur Ermittlung einer Aktivität einer Verschlüsselung eines Speichers eines Prozessors oder einer virtuellen Maschine, ein zugehöriges Gerät aufweisend einen Prozessor, ein Computerprogrammprodukt und ein computerlesbares Medium.

### Beschreibung des Stands der Technik

Manche modernen Prozessoren und Systems-on-Chips (SoCs) unterstützen eine transparente, das bedeutet für den Anwender nicht sichtbare Speicherverschlüsselung von Arbeitsspeicher (RAM) oder Programmcodespeicher (Flash). Eine transparente Speicherverschlüsselung wird von Prozessoren unterschiedlicher Hersteller unterstützt. Einige Beispiele sind NXP LPC55Sxx PRINCE Real-time Data Encryption, i.MX6 UltraLite Bus Encryption Engine ermöglicht eine on-the-fly DRAM Verschlüsselung, AMD Secure Memory Encryption (SME), AMD Transparent Secure Memory Encryption (TSME), AMD Secure Encrypted Virtualization (SEV), AMD Secure Encrypted Virtualization-Encrypted State (SEV-ES), AMD Secure Encrypted Virtualization-Secure Nested Paging (SEV-SNP), Intel Total Memory Encryption und Intel Multi-Key Total Memory Encryption. Ein weiteres Beispiel ist Intel SGX, wobei es sich um einen Satz an CPU-Anweisungen, mit denen Applikationen Enklaven erstellen können, deren Speicherbereiche u.a. verschlüsselt werden, handelt. Eine solche Speicherverschlüsselung kann auch als Confidential Computing bezeichnet werden.

Bei einer transparenten Speicherverschlüsselung von Prozessoren kann der gesamte Speicher, bestimmte Speicherbereiche oder speziell der Speicher, der von einer bestimmten (virtuellen) Maschine oder einzelnen Prozessen verwendet wird, verschlüsselt werden. Dazu muss der Prozessor entsprechend konfiguriert werden, z.B. über BIOS-Einstellungen oder über Programmbefehle bzw. Registerkonfigurationen, die üblicherweise ein Boot-Loader, Hypervisor und/oder ein Betriebssystem ausführt. Dabei kann ein Speicher als separater Speicherbaustein oder separates Speichermodul realisiert sein, der mit einem den Prozessor umfassenden Prozessorbaustein über einen Bus verbunden ist. Es ist jedoch auch möglich, dass ein Speicher und ein Prozessor in einem gemeinsamen Baustein integriert sind, z.B. in einem Multi-Chip-Modul, in dem mehrere Halbleiter-Dies direkt (Die-Stacking) oder über einen Interposer verbunden sind.

Dabei kann jedoch als ein unerwarteter Effekt auftreten, dass die gewünschte Speicherverschlüsselung nicht aktiv ist. Die Transparenz, die die Speicherverschlüsselung aus Anwendungssicht bietet, erlaubt zwar eine Anwendung ohne Anpassungen der Applikation, aber so kann auch leicht ein Sicherheitsproblem nicht erkannt werden. Insbesondere könnte die Konfiguration oder ein verwendetes Konfigurationstool fehlerhaft sein, ein Prozessor die Speicherverschlüsselung nicht unterstützen, die Implementierung der Speicherverschlüsselung auf dem Prozessor einen Fehler oder eine Schwachstelle aufweisen.

Dies ist insbesondere relevant, da unterschiedliche Softwarekomponenten (z.B. BIOS, Boot-Loader, Betriebssystem-Kernel, Hypervisor, Virtual Machine Monitor) eine Speicherverschlüsselung konfigurieren können, und da ein Prozessor unterschiedliche Varianten unterstützen kann. Daher ist insbesondere eine fehlerhafte Konfiguration nicht auszuschließen. So kann insbesondere bei einem Update die Konfiguration versehentlich so geändert werden, dass die Speicherverschlüsselung nicht mehr aktiv ist. Auch kann der Fall auftreten, dass eine ausgeführte Virtuelle Maschine oder eine ausgeführte Container-Applikation von einem Prozessor mit aktiver Speicherverschlüsselung auf einen anderen Prozessor ohne aktive Speicherverschlüsselung migriert wird.

Bei manchen Systemen kann über ein Programm abgefragt werden, ob die Speicherverschlüsselung aktiv ist. Zum einen sagt die Ausgabe aber nicht verlässlich aus, ob die Speicherverschlüsselung tatsächlich aktiv und wirksam ist. Darüber hinaus wird dieser Ansatz nicht allgemein unterstützt und ist bei einer nur teilweisen Arbeitsspeicherverschlüsselung (z.B. nur für bestimmte Speicherbereiche, nur für bestimmte virtuelle Maschinen) nicht aussagekräftig, ob für einen konkreten Code/Daten Block die Arbeitsspeicherverschlüsselung tatsächlich aktiv ist. Dokument US2013/036314 beschreibt eine Vorrichtung zum Manipulationsschutz eines verschlüsselten Speichers auf der Grundlage gemessener physikalischer Größen.

Die Aufgabe der Erfindung besteht darin, eine Lösung bereitzustellen, um zuverlässig zu überprüfen, ob eine transparente Speicherverschlüsselung eines Prozessors aktiv ist.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zur Ermittlung einer Aktivität einer Verschlüsselung eines Speichers eines Prozessors oder einer virtuellen Maschine. Das Verfahren weist die folgenden Schritte auf:
- mindestens ein Zugreifen auf mindestens einen Speicherbereich des Speichers,
- Messen von mindestens einer physikalischen Größe, wobei die physikalische Größe von dem mindestens einen Zugreifen abhängt,
- Vergleichen der mindestens einen physikalischen Größe mit mindestens einem Sollwert und
- Ermitteln der Aktivität der Verschlüsselung des Speichers durch Ergebnisse des Vergleichens der mindestens einen physikalischen Größe mit dem mindestens einem Sollwert.

Dass die physikalische Größe von dem mindestens einem Zugreifen abhängt, bedeutet, dass die physikalische Größe durch Zugreifen auf den mindestens einen Speicherbereich des Speichers beeinflusst wird.

Ein Aspekt der Erfindung besteht darin, den Stand der Technik dahingehend zu verbessern, dass eine Lösung bereitgestellt wird, um zuverlässig zu überprüfen, ob eine transparente Speicherverschlüsselung eines Prozessors tatsächlich aktiv ist. Die Erfindung löst die Aufgabe dadurch, dass eine physikalische Größe, welche von dem mindestens einem Zugreifen abhängt, gemessen wird und der Wert der physikalischen Größe plausibilisiert wird. Die Überprüfung kann beim Hochlauf erfolgen, vor dem Laden oder Bearbeiten von sensiblen Daten oder periodisch, oder sie kann durch ein Ereignis angestoßen werden, z.B. einen Tastendruck. Vorzugsweise erfolgt die Überprüfung wiederholt im laufenden Betrieb des Prozessors.

Es werden somit probehalber Speicherzugriffe auf zumindest einen, vorzugsweise mehrere vorgegebene Speicherbereiche des Speichers durchgeführt. Anhand von ermittelten Effekten, welche Einfluss auf die physikalische Größe haben, wird darauf geschlossen, ob eine Speicherverschlüsselung tatsächlich aktiv ist.

Die Effekte, welche Einfluss auf die physikalische Größe haben, können insbesondere indirekte Nebeneffekte betreffen, sie können jedoch auch direkte Effekte sein, die bei einem Speicherzugriff erfolgen. Insbesondere kann eine Überwachung der Signale auf einer Speicherschnittstelle oder ein Prüfen der geschriebenen Speicherinhalte über einen von der normalen Speicherschnittstelle unabhängigen Prüfmechanismus erfolgen.

In einer Weiterbildung der Erfindung ist der Speicher als:
- Programmcodespeicher,
- Konfigurationsspeicher,
- Flash-Speichereinheit,
- Arbeitsspeicher,
- Random-Access Memory (RAM),
- Dynamic Random-Access Memory (DRAM),
- Static Random-Access Memory (SRAM),
- Magneto-resistive Random-Access Memory (MRRAM),
- Resistive random-access memory (ReRAM) oder
- Phase-change memory (PCM)
ausgebildet. Die Erfindung kann auf alle verfügbaren Speicher, welche eine Verschlüsselung, der Aktivität und Wirksamkeit für den Anwender nicht offensichtlich ist, angewandt werden.

In einer weiteren Weiterbildung der Erfindung umfasst die mindestens eine physikalische Größe:
- eine Dauer des Abarbeitens des Zugreifens auf den mindestens einen Speicherbereich des Speichers,
- eine Latenz des mindestens einen Zugreifens,
- einen Stromverbrauch bei dem mindestens einem Zugreifen,
- eine Temperaturentwicklung eines Prozessors bei dem mindestens einem Zugreifen,
- eine Anpassung von Spannungspegeln eines Prozessors,
- eine Anpassung einer Frequenz von Taktsignalen eines Prozessors und/oder
- eine elektromagnetische Abstrahlung bei dem mindestens einem Zugreifen.

Aus der Dauer des Abarbeitens des Zugreifens auf den mindestens einen Speicherbereich des Speichers lässt sich ein Durchsatz von Speicherzugriffen bestimmen. Durchsatz und Latenz des Zugreifens können mittels üblichen Performance-Timern ermittelt werden.

Ein Stromverbrauch oder die Temperaturentwicklung kann von manchen CPUs intern ermittelt werden, oder es kann die Information von einem separaten Stromverbrauchssensor oder Power-Management-IC abgefragt werden.

Die ermittelte physikalische Größe, auch als Nebeneffekt-Daten bezeichenbar, können anschließend in Relation gesetzt und plausibilisiert werden. Insbesondere kann ermittelt werden, ob die physikalische Größe unterhalb eines erwarteten Sollwerts liegt, d.h. insbesondere ein Vorgang wie das Zugreifen schneller als erwartet durchgeführt wird, eine geringere als erwartete Latenz vorliegt oder der Stromverbrauch geringer als erwartet ist. Aus den zuletzt genannten Ausführungen der Erfindung kann insbesondere geschlossen werden, dass die Verschlüsselung inaktiv ist.

In einer weiteren Weiterbildung der Erfindung weist das Verfahren den weiteren Schritt auf:
- Ermitteln des mindestens einen Sollwerts oder
- Abrufen des mindestens einen Sollwerts.

Der Sollwert wird somit vor dem Vergleichen der mindestens einen physikalischen Größe ermittelt, insbesondere durch eine weitere Messung, oder abgerufen, insbesondere von einem Speicher, auf welchem ein Wert einer früheren Messung abgelegt wurde.

In einer weiteren Weiterbildung der Erfindung wird der mindestens eine Sollwert durch:
- mindestens ein Zugreifen auf mindestens einen zweiten Speicherbereich des Speichers ermittelt, wobei der zweite Speicherbereich unverschlüsselt ist, und/oder
- eine Messung an einer zweiten virtuellen Maschine ermittelt.

Durch das Zugreifen auf einen zweiten Speicherbereich des Speichers oder eines zweiten Speichers kann ein Quervergleich zwischen unterschiedlichen Speicherbereichen, insbesondere dem zuerst eingeführten Speicherbereich und einem zweiten Speicherbereich des Speichers, erfolgen. Wenn insbesondere bekannt ist, dass manche Speicherbereiche, insbesondere der zweite Speicherbereich des Speichers oder des zweiten Speichers, nicht verschlüsselt sind, andere Speicherbereich dagegen vermeintlich schon, kann der Performance-Unterschied bei Speicherzugriffen auf diese unterschiedlichen Bereiche plausibilisiert werden. Dazu können z.B. spezielle Testfunktionen (Memory Benchmark) verwendet werden.

In einer Variante wird die Performance einer virtuellen Maschine, insbesondere ausgebildet als App oder Container-Instanz, gemessen. Die Messung erfolgt einmal bei einem Start der virtuellen Maschine mit Speicherverschlüsselung und einmal ohne Speicherverschlüsselung.

Nur wenn die Performance zwischen beiden Varianten (vermeintlich verschlüsselt und unverschlüsselt) sich wie erwartet unterscheidet, insbesondere mehr als 1%, mehr als 3% oder mehr als 5% Unterschied, ist der Test erfolgreich und es mir auf eine aktive Speicherverschlüsselung geschlossen.

Falls unterschiedliche Arten der Speicherverschlüsselung aktivierbar sind, insbesondere unterschiedliche Cryptoalgorithmen (z.B. AES, PRESENT), Schlüssellängen, unterschiedliche Betriebsmodi eines Cryptoalgorithmus, insbesondere nur Integritätsschutz mit unterschiedlich großer MAC-Prüfsumme, nur Integritätsschutz ohne Verschlüsselung, z.B. AES-CTR, Authenticated Encryption, z.B. AES-XTS, AES-CCM oder AES-GCM, mit oder ohne Seitenkanalhärtung, dann können auch diese Varianten konfiguriert werden und es kann anhand von beobachtbaren Seiteneffekten plausibilisiert werden, ob tatsächlich die gewünschte Art der Speicherverschlüsselung aktiv ist.

In einer weiteren Weiterbildung der Erfindung werden in das Ermitteln der Aktivität der Verschlüsselung des Speichers außerdem Ergebnisse der folgenden Verfahrensschritte einbezogen:
- Senden von ersten Testdaten an den mindestens einen Speicherbereich des Speichers,
- Speichern von zweiten Testdaten in den mindestens einen Speicherbereich, wobei die zweiten Testdaten eine Variante der ersten Testdaten darstellen,
- Lesen der zweiten Testdaten von dem mindestens einen Speicherbereich und
- Vergleichen der ersten Testdaten und der zweiten Testdaten.

Das hat den Vorteil, dass es möglich ist, erste Testdaten bei vermeintlich aktivierter Speicherverschlüsselung in einen Speicher zu schreiben. Bei einer aktiven Speicherverschlüsselung werden die ersten Testdaten in zweite Testdaten verschlüsselt und in Form der zweiten Testdaten gespeichert oder aber, falls die Verschlüsselung inaktiv ist, nicht verschlüsselt und unverschlüsselt als zweite Testdaten gespeichert. Falls beim Lesen der zweiten Testdaten festgestellt wird, dass diese im Klartext lesbar sind, wurden sie unverschlüsselt abgelegt und die Verschlüsselung des Speichers war nicht aktiv.

Die zweiten Testdaten können bei geänderter Konfiguration (deaktivierte Speicherverschlüsselung, geänderte Schlüsselkonfiguration der Speicherverschlüsselung) wieder eingelesen werden. Falls die zweiten Testdaten dann wider Erwarten ohne Fehlermeldung lesbar sind, oder wenn sie im Klartext lesbar sind, d.h. mit den ersten Testdaten übereinstimmen, so ist daraus ermittelbar, dass die Modifikation der ersten Testdaten in zweite Testdaten, d.h. die Durchführung einer kryptographischen Modifikation der ersten Testdaten zur Ermittlung der zweiten Testdaten bei einem Zugreifen auf den Speicher, nicht erfolgt ist, d.h. dass die ursprünglich aktivierte Speicherverschlüsselung wirkungslos war, oder dass ein Schlüsselwechsel der Speicherverschlüsselung wirkungslos war.

In einer weiteren Weiterbildung der Erfindung erfolgt das Vergleichen der ersten Testdaten und der zweiten Testdaten durch eine Überwachungskomponente des Speichers.

Weiterhin ist es möglich, dass ein Arbeitsspeicherbaustein eine Überwachungsfunktion aufweist. Diese erkennt, wenn ein bestimmter Wert (magic value) in eine bestimmte Arbeitsspeicheradresse geschrieben wird. Dieser erwartete Wert wird bei aktivierter Speicherverschlüsselung wiederholt während der Laufzeit, aber auch bereits beim Start in diese Adresse geschrieben. Wenn die Speicherverschlüsselung aktiv und wirksam ist, wird der geschriebene Wert verschlüsselt und daher ein anderer Wert, nämlich der verschlüsselte Wert, tatsächlich in diese Speicherzelle geschrieben.

Falls die Speicherverschlüsselung wirkungslos wäre, würde jedoch der tatsächliche Klartextwert, d.h. der magic value, in den Speicher geschrieben. Dessen Überwachungsfunktion kann dies erkennen und ein entsprechendes Alarmsignal bereitstellen. Diese Funktionalität ist vorzugsweise wie beschrieben in den Arbeitsspeicherbaustein integriert, sie kann allgemein jedoch auch als Zusatzkomponente realisiert werden, insbesondere über einen FPGA, ASIC oder einen zusätzlichen Prozessor, der die Speicherschnittstelle zwischen Prozessor und Speicher überwacht.

In einer weiteren Weiterbildung der Erfindung weist das Verfahren mindestens einen der weiteren Schritte auf:
- Ausgabe eines Warnsignals,
- Ausgabe einer Fehlermeldung,
- Terminieren einer Applikation,
- Verhindern des Starts eine Applikation,
- Unterbrechen einer Netzwerkkommunikation,
- Beschränken einer Netzwerkkommunikation,
- Auslösen eines Systemneustartes,
- Löschen von Daten in dem Speicher,
- Beschränken eines Datenzugriffes und/oder
- Beenden eines Datenzugriffes.

Mindestens einer der weiteren Schritte wird insbesondere ausgeführt, falls die ersten Testdaten mit den zweiten Testdaten übereinstimmen oder falls die gemessene physikalische Größe einen bestimmten Wert, insbesondere einen Wert, der von dem Sollwert auf eine unzulässige Art abweicht, aufweist.

Das Beschränken und das Beenden des Datenzugriffes und das Löschen von Daten in dem Speicher kann insbesondere Anwendungsdaten oder kryptographische Schlüssel betreffen.

In einer weiteren Weiterbildung der Erfindung weist der Speicherbereich eine Schnittstelle auf, über welche die zweiten Testdaten gelesen werden können.

Es kann somit ein spezieller Arbeitsspeicherbaustein auf dem Gerät des Prozessors vorgesehen sein, der aus Sicht des Prozessors gleichartig, wie ein normaler Arbeitsspeicherbaustein ist. Arbeitsspeicherbaustein verfügt über eine zweite Schnittstelle (z.B. I2C, SPI, USB), über die der Inhalt des Arbeitsspeicherbaustein für den Prozessor abfragbar ist. Somit kann überprüft werden, ob im Speicher, insbesondere in einem externen Speicher, unbeabsichtigt Klartextdaten gespeichert sind.

In einer weiteren Weiterbildung der Erfindung ist der Prozessor als:
- Software-programmierbarer Prozessor (insbesondere Central Processing Unit (CPU), Graphics Processing Unit (GPU), oder Application-Specific Instruction set Processor (ASIP)),
- Prozessor mit rekonfigurierbarer Digitalschaltung,
- Prozessor mit eingebettetem FPGA oder
- AI-Inference-Engine, die Daten in einem externen Arbeitsspeicher bearbeitet
ausgebildet.

In einer weiteren Weiterbildung der Erfindung wird der Prozessor von einem technischen Gerät aufgewiesen, wobei das technische Gerät ausgebildet ist als:
- ein Steuergerät,
- ein Gerät einer Internet-Of-Things-Umgebung,
- ein IoT-Edge-Server,
- ein Verschlüsselungsgerät und/oder
- ein Hardware Security Modul.

In einer weiteren Weiterbildung der Erfindung werden die Schritte des Verfahrens zu:
- zuvor festgelegten Zeitpunkt,
- manuell wählbaren Zeitpunkten,
- beim Start des Prozessors oder der virtuellen Maschine
- beim Start und/oder zur Laufzeit einer Applikation, bevor sensible Daten verarbeitet werden und/oder
- in periodischen zeitlichen Abständen
wiederholt.

Dies hat insbesondere den Vorteil, dass eine Verschlüsselung auch dann geprüft werden kann, wenn an einem Gerät seit Längerem kein Neustart erfolgt ist.

Die Erfindung umfasst außerdem ein Gerät aufweisend einen Prozessor, wobei das Gerät ausgebildet ist ein erfindungsgemäßes Verfahren zur Ermittlung einer Aktivität einer Verschlüsselung eines Speichers des Prozessors auszuführen.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung bietet mehrere Vorteile. Unteranderem kann erkannt werden, wenn eine eigentlich erwartete Speicherverschlüsselung nicht stattfindet. Dadurch wird verhindert, dass sensible Daten, insbesondere Schlüssel, Anwendungsdaten mit kritischen Informationen, insbesondere Konstruktionsdaten oder personenbezogene Daten, ungeschützt in einen Arbeitsspeicher geschrieben werden.

Eine Speicherverschlüsselung schützt dabei nicht nur die Vertraulichkeit der Daten, sondern auch deren Integrität, so ist insbesondere ein Manipulationsschutz gegeben. Dadurch kann erkannt werden, wenn die Vertraulichkeit und/oder Integrität von Daten, die in einem Arbeitsspeicher (RAM) gespeichert werden, nicht gewährleistet ist.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens und
- Fig. 2: eine schematische Darstellung eines erfindungsgemäßen Gerätes zur Ausführung eines erfindungsgemäßen Verfahrens.

### DETAILLIERTE BESCHREIBUNG DER ERFINDUNG

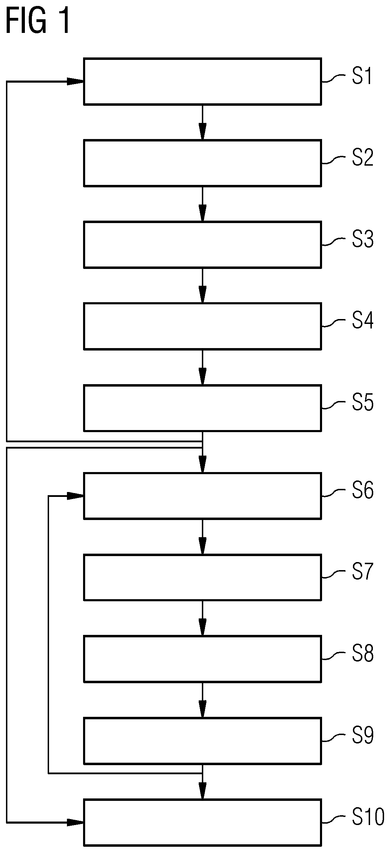

Fig. 1 zeigt ein Ablaufdiagramm des erfindungsgemäßen Verfahrens zur Ermittlung einer Aktivität einer Verschlüsselung eines Speichers eines Prozessors oder einer virtuellen Maschine.

In Fig. 1 sind die folgenden Schritte gezeigt:
- Schritt S1: Mindestens ein Zugreifen (S1) auf mindestens einen Speicherbereich des Speichers,
- Schritt S2: Messen (S2) von mindestens einer physikalischen Größe, wobei die physikalische Größe von dem mindestens einem Zugreifen abhängt,
- Schritt S3: Ermitteln mindestens eines Sollwerts oder Abrufen des mindestens einen Sollwerts,
- Schritt S4: Vergleichen der mindestens einen physikalischen Größe mit dem mindestens einem Sollwert,
- Schritt S5: Ermitteln der Aktivität der Verschlüsselung des Speichers durch Ergebnisse des Vergleichens der mindestens einen physikalischen Größe mit dem mindestens einem Sollwert.

Das Ermitteln S5 der Aktivität der Verschlüsselung des Speichers ist dabei durch die folgenden Schritte unterstützbar:
- Schritt S6: Senden von ersten Testdaten an den mindestens einen Speicherbereich des Speichers,
- Schritt S7: Speichern von zweiten Testdaten in den mindestens eine Speicherbereich, wobei die zweiten Testdaten eine Variante der ersten Testdaten darstellen,
- Schritt S8: Lesen der zweiten Testdaten von dem mindestens einen Speicherbereich und
- Schritt S9: Vergleichen der ersten Testdaten und der zweiten Testdaten.

Werden in den zuvor genannten Schritten keine Auffälligkeiten erkannt, endet das Verfahren vorerst.

Anschließend können die genannten Schritte des Verfahrens zu:
- zuvor festgelegten Zeitpunkt,
- manuell wählbaren Zeitpunkten,
- beim Start des Prozessors oder der virtuellen Maschine und/oder
- in periodischen zeitlichen Abständen
wiederholt werden. Das bedeutet, dass auf den Schritt S5 erneut der Schritt S1 folgen kann und/oder dass auf den Schritt S9 erneut der Schritt S6 (oder auch der Schritt S1) folgen kann.

Wird eine Auffälligkeit erkannt so kann direkt, insbesondere nach Schritt S5 oder nach Schritt S9, Schritt S10 eingeleitet werden. Es erfolgt ein Reagieren durch:
- Ausgabe eines Warnsignals,
- Ausgabe einer Fehlermeldung,
- Terminieren einer Applikation,
- Verhindern des Starts eine Applikation,
- Unterbrechen einer Netzwerkkommunikation,
- Beschränken einer Netzwerkkommunikation,
- Auslösen eines Systemneustartes,
- Löschen von Daten in dem Speicher,
- Beschränken eines Datenzugriffes und/oder
- Beenden eines Datenzugriffes,
insbesondere falls die ersten Testdaten mit den zweiten Testdaten übereinstimmen oder falls die physikalische Größe mit dem mindestens einem Sollwert nicht übereinstimmt.

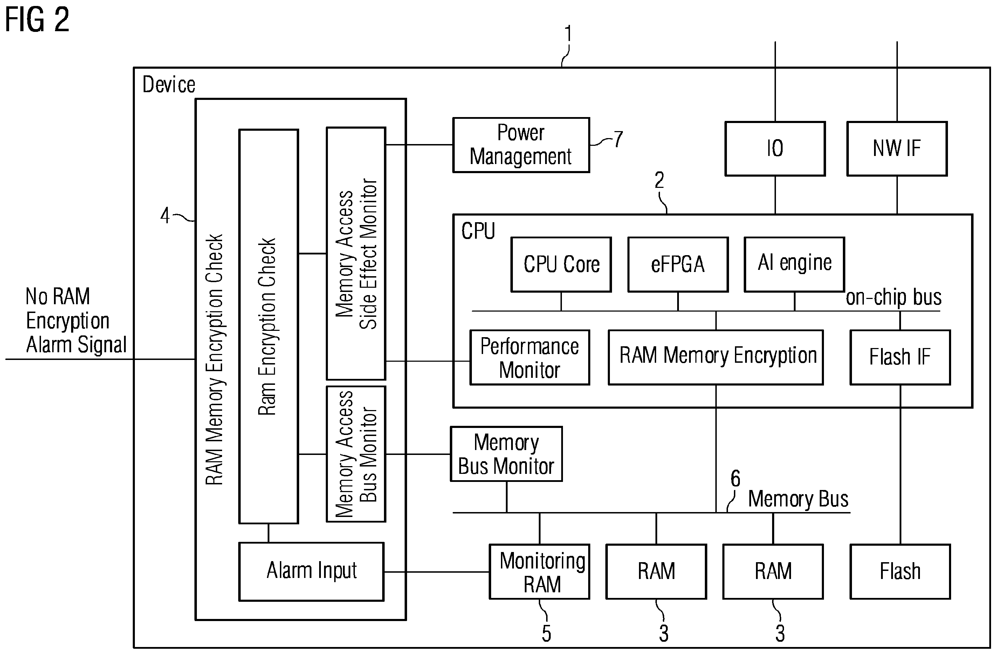

Fig. 2 zeigt eine schematische Darstellung eines erfindungsgemäßen Gerätes aufweisend einen Prozessor zur Ausführung eines erfindungsgemäßen Verfahrens zur Ermittlung einer Aktivität einer Verschlüsselung eines Speichers des Prozessors.

Die Abbildung zeigt ein Gerät 1, insbesondere ein Steuergerät, IoT-Gerät, IoT-Edge-Server, Verschlüsselungsgerät, Hardware Security Modul.

Das Gerät 1 weist einen Prozessor 2, insbesondere eine CPU, sowie einen Flash-Speicher, mehrere RAM-Speicherbausteine (3, 5) als Arbeitsspeicher, eine Ein-/Ausgabeschnittstelle IO und eine Netzwerkschnittstelle (NW IF) auf.

Der Prozessor 2 enthält einen CPU-Core, einen embedded FPGA und einen AI-Beschleuniger. Der Speicher 3, 5, insbesondere der externe RAM, ist über eine Arbeitsspeicherverschlüsselungseinheit (RAM Memory Encryption) des Prozessors 2 angebunden.

Es soll nun beim Hochlauf bzw. Starten oder Booten des in Fig. 2 gezeigten Gerätes 1 und/oder im laufenden Betrieb des Geräts 1 überprüft werden, ob tatsächlich eine Speicherverschlüsselung für den Speicher 3, 5 erfolgt.

Dazu ist eine Speicherverschlüsselungs-Überwachungskomponente 4 (als "RAM Memory Encryption Check" in Fig. 2 bezeichnet) vorgesehen. Die Speicherverschlüsselungs-Überwachungskomponente 4 überwacht, ob eine Verschlüsselung des Speichers 3, 5 tatsächlich erfolgt.

Die Speicherverschlüsselungs-Überwachungskomponente 4 ist in Fig. 2 als eigenständige Komponente vorgesehen, sie kann allgemein in Hardware, Software, Firmware realisiert sein und vollständig oder teilweise im Prozessor oder einem System Management Chip (nicht dargestellt) oder einen Power Management Chip integriert sein.

Die Speicherverschlüsselungs-Überwachungskomponente 4 nach Fig. 2 überwacht verschiedenen Kriterien, insbesondere:
- Performance-Daten des Prozessors 2, insbesondere bezüglich Speicherzugriffen und
- Stromverbrauchsüberwachung, insbesondere durch Information einer Power Management Komponente 7.

Außerdem erfolgt eine Überwachung des Memory-Busses 6, über den die externen RAM-Speicherbausteine 3, 5 mit dem Prozessor 2 verbunden sind.

Es ist ein spezieller Monitoring-RAM Baustein 5, auch als Speicher mit integrierter Überwachungskomponente bezeichenbar, vorgesehen. Die Überwachungskomponente des Speichers 5 kann über eine separate Schnittstelle ein Alarmsignal bereitstellen, falls wider Erwarten ein bestimmter Klartext-Wert (magic value) in eine überwachte Speicheradresse geschrieben wird. Ebenso ist es möglich (nicht dargestellt), dass eine eigenständige RAM-Überwachungskomponente vorgesehen ist, die über eine separate Schnittstelle die tatsächlich in einem Speicher 3, der keine integrierte Überwachungskomponente aufweist, gespeicherten Werte abfragt und die ein Alarmsignal bereitstellt, falls wider Erwarten ein bestimmter Klartext-Wert (magic value) aus der überwachten Speicheradresse des Speichers 3 ausgelesen wird.

Bei einer fehlerhaften oder unplausiblen Arbeitsspeicherverschlüsselung wird ein Alarm-Signal bereitgestellt (NO RAM Encryption Alarm Signal). Es kann in einer Variante auch automatisch eine Reaktion erfolgen, insbesondere Geräteneustart, Löschen von Speicherinhalten im RAM 3, 5 oder Flash-Speicher oder ein Beenden von Prozessen, die auf dem Prozessor 2 ausgeführt werden (CPU) oder dem Deaktivieren von Hardware-Beschleuniger-Komponenten (eFPGA, AI-Engine) des Prozessors.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zur Ermittlung einer Aktivität einer transparenten Verschlüsselung eines Speichers (3) eines Prozessors (2) oder einer virtuellen Maschine, mit den Schritten:
- mindestens ein Zugreifen (S1) auf mindestens einen Speicherbereich des Speichers (3),
- Messen (S2) von mindestens einer physikalischen Größe, wobei die physikalische Größe von dem mindestens einem Zugreifen abhängt,
- Vergleichen (S4) der mindestens einen physikalischen Größe mit mindestens einem Sollwert und
- Ermitteln (S5) der Aktivität der Verschlüsselung des Speichers (3) durch Ergebnisse des Vergleichens der mindestens einen physikalischen Größe mit dem mindestens einen Sollwert
wobei in das Ermitteln der Aktivität der Verschlüsselung des Speichers (3) außerdem Ergebnisse der folgenden Verfahrensschritte einbezogen werden:
- Senden (S6) von ersten Testdaten an den mindestens einen Speicherbereich des Speichers (3),
- Speichern (S7) von zweiten Testdaten in den mindestens einen Speicherbereich, wobei die zweiten Testdaten eine Variante der ersten Testdaten darstellen,
- Lesen (S8) der zweiten Testdaten von dem mindestens einen Speicherbereich und
- Vergleichen (S9) der ersten Testdaten und der zweiten Testdaten.

2. Verfahren nach Anspruch 1,
wobei der Speicher (3) als:
- Programmcodespeicher,
- Konfigurationsspeicher,
- Flash-Speichereinheit,
- Arbeitsspeicher,
- Random-Access Memory (RAM),
- Dynamic Random-Access Memory (DRAM),
- Static Random-Access Memory (SRAM),
- Magneto-resistive Random-Access Memory (MRRAM),
- Resistive random-access memory (ReRAM) oder
- Phase-change memory (PCM)
ausgebildet ist.

3. Verfahren nach einem der vorhergehenden Ansprüche,
wobei die mindestens eine physikalische Größe:
- eine Dauer des Abarbeitens des Zugreifens (S1) auf den mindestens einen Speicherbereich des Speichers (3),
- eine Latenz des mindestens einen Zugreifens (S1),
- einen Stromverbrauch bei dem mindestens einem Zugreifen,
- eine Temperaturentwicklung des Prozessors (2) bei dem mindestens einem Zugreifen (S1),
- eine Anpassung von Spannungspegeln des Prozessors (3),
- eine Anpassung einer Frequenz von Taktsignalen des Prozessors (2) und/oder
- eine elektromagnetische Abstrahlung bei dem mindestens einem Zugreifen (S1)
umfasst.

4. Verfahren nach einem der vorhergehenden Ansprüche,
mit dem weiteren Schritt (S3):
- Ermitteln des mindestens einen Sollwerts oder
- Abrufen des mindestens einen Sollwerts.

5. Verfahren nach einem der vorhergehenden Ansprüche,
wobei der mindestens eine Sollwert durch:
- mindestens ein Zugreifen auf mindestens einen zweiten Speicherbereich des Speichers (3) ermittelt, wobei der zweite Speicherbereich unverschlüsselt ist und/oder
- eine Messung an einer zweiten virtuellen Maschine
ermittelt wird.

6. Verfahren einem der vorhergehenden Ansprüche,
wobei das Vergleichen der ersten Testdaten und der zweiten Testdaten durch eine Überwachungskomponente des Speichers (5) erfolgt.

7. Verfahren einem der vorhergehenden Ansprüche,
mit den weiteren Schritten (S10):
- Ausgabe eines Warnsignals,
- Ausgabe einer Fehlermeldung,
- Terminieren einer Applikation,
- Verhindern des Starts eine Applikation,
- Unterbrechen einer Netzwerkkommunikation,
- Beschränken einer Netzwerkkommunikation,
- Auslösen eines Systemneustartes,
- Löschen von Daten in dem Speicher,
- Beschränken eines Datenzugriffes und/oder
- Beenden eines Datenzugriffes,
insbesondere falls die ersten Testdaten mit den zweiten Testdaten übereinstimmen.

8. Verfahren einem der vorhergehenden Ansprüche,
wobei der Speicherbereich eine Schnittstelle, über welche die zweiten Testdaten gelesen werden können, aufweist.

9. Verfahren nach einem der vorhergehenden Ansprüche,
wobei der Prozessor (2) als:
- Software-programmierbarer Prozessor,
- Prozessor mit rekonfigurierbarer Digitalschaltung,
- Prozessor mit eingebettetem FPGA oder
- AI-Inference-Engine
ausgebildet ist.

10. Verfahren nach einem der vorhergehenden Ansprüche,
wobei der Prozessor (2) von einem technischen Gerät (1) aufgewiesen wird, wobei das technische Gerät (1) ausgebildet ist als:
- ein Steuergerät,
- ein Gerät einer Internet-Of-Things-Umgebung,
- ein IoT-Edge-Server,
- ein Verschlüsselungsgerät und/oder
- ein Hardware Security Modul.

11. Verfahren nach einem der vorhergehenden Ansprüche,
wobei die Schritte des Verfahrens (S1 bis S9 oder S10) zu:
- zuvor festgelegten Zeitpunkt,
- manuell wählbaren Zeitpunkten,
- beim Start des Prozessors (2) oder der virtuellen Maschine,
- beim Start und/oder zur Laufzeit einer Applikation, bevor sensible Daten verarbeitet werden und/oder
- in periodischen zeitlichen Abständen
wiederholt werden.

12. Gerät (1) aufweisend einen Prozessor (2),
wobei das Gerät (1) ausgebildet ist ein Verfahren zur Ermittlung einer Aktivität einer Verschlüsselung eines Speichers (3) des Prozessors (3) nach einem der vorhergehenden Ansprüche auszuführen.

13. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 11 ausgeführt werden, wenn das Computerprogramm auf der Recheneinheit ausgeführt wird.

14. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 11 ausgeführt werden, wenn das Computerprogramm auf der Recheneinheit ausgeführt wird.

## Claims

1. Method for determining an activity of transparent encryption of a memory (3) of a processor (2) or a virtual machine, comprising the steps of:
- accessing (S1) at least once at least one memory area of the memory (3),
- measuring (S2) at least one physical variable, the physical variable being dependent on the at least one access operation,
- comparing (S4) the at least one physical variable with at least one target value, and
- determining (S5) the activity of the encryption of the memory (3) by means of results from comparing the at least one physical variable with the at least one target value,
wherein results of the following method steps are also included in the determination of the activity of the encryption of the memory (3):
- sending (S6) first test data to the at least one memory area of the memory (3),
- storing (S7) second test data in the at least one memory area, the second test data representing a variant of the first test data,
- reading (S8) the second test data from the at least one memory area, and
- comparing (S9) the first test data and the second test data.

2. Method according to Claim 1,
wherein the memory (3) is in the form of:
- a program code memory,
- a configuration memory,
- a flash memory unit,
- a main memory,
- a Random Access Memory (RAM),
- a Dynamic Random Access Memory (DRAM),
- a Static Random Access Memory (SRAM),
- a Magneto-resistive Random Access Memory (MRRAM),
- a Resistive Random Access Memory (ReRAM), or
- a phase-change memory (PCM).

3. Method according to one of the preceding claims,
wherein the at least one physical variable comprises:
- a duration of accessing (S1) the at least one memory area of the memory (3),
- a latency of the at least one access operation (S1),
- a power consumption during the at least one access operation,
- a temperature development of the processor (2) during the at least one access operation (S1),
- an adjustment of voltage levels of the processor (3),
- an adjustment of a frequency of clock signals of the processor (2), and/or
- electromagnetic radiation during the at least one access operation (S1).

4. Method according to one of the preceding claims, comprising the further step (S3) of:
- determining the at least one target value or
- retrieving the at least one target value.

5. Method according to one of the preceding claims,
wherein the at least one target value:
- is determined by accessing at least one second memory area of the memory (3), the second memory area being unencrypted, and/or
- is determined by means of a measurement on a second virtual machine.

6. Method according to one of the preceding claims,
wherein the first test data and the second test data are compared by means of a monitoring component of the memory (5).

7. Method according to one of the preceding claims,
comprising the further steps (S10) of:
- outputting a warning signal,
- outputting an error message,
- scheduling an application,
- preventing the start of an application,
- interrupting network communication,
- restricting network communication,
- triggering a system restart,
- erasing data in the memory,
- restricting data access, and/or
- stopping data access,
in particular if the first test data match the second test data.

8. Method according to one of the preceding claims,
wherein the memory area has an interface via which the second test data can be read.

9. Method according to one of the preceding claims,
wherein the processor (2) is in the form of:
- a software-programmable processor,
- a processor with a reconfigurable digital circuit,
- a processor with an embedded FPGA, or
- an AI inference engine.

10. Method according to one of the preceding claims,
wherein the processor (2) is included in a technical device (1),
wherein the technical device (1) is in the form of:
- a control device,
- a device in an Internet of Things environment,
- an IoT edge server,
- an encryption device, and/or
- a hardware security module.

11. Method according to one of the preceding claims,
wherein the steps of the method (S1 to S9 or S10) are repeated:
- at a predetermined time,
- at manually selectable times,
- when the processor (2) or the virtual machine is started,
- at the start and/or runtime of an application before sensitive data are processed, and/or
- at periodic intervals of time.

12. Device (1) having a processor (2),
wherein the device (1) is designed to carry out a method for determining an activity of encryption of a memory (3) of the processor (3) according to one of the preceding claims.

13. Computer program product comprising a computer program, wherein the computer program can be loaded into a memory device of a computing unit, wherein the computer program is used to carry out the steps of a method according to one of Claims 1 to 11 when the computer program is executed on the computing unit.

14. Computer-readable medium on which a computer program is stored, wherein the computer program can be loaded into a memory device of a computing unit, wherein the computer program is used to carry out the steps of a method according to one of Claims 1 to 11 when the computer program is executed on the computing unit.

## Revendications

1. Procédé destiné à la détermination d'une activité d'un cryptage transparent d'une mémoire (3) d'un processeur (2) ou d'une machine virtuelle, avec les étapes suivantes :
- au moins un accès (S1) à au moins une zone de mémoire de la mémoire (3),
- mesure (S2) d'au moins une grandeur physique, dans lequel la grandeur physique dépend de l'au moins un accès,
- comparaison (S4) de l'au moins une grandeur physique à au moins une valeur de consigne et
- détermination (S5) de l'activité du cryptage de la mémoire (3) par le biais de résultats de la comparaison de l'au moins une grandeur physique à l'au moins une valeur de consigne
dans lequel lors de la détermination de l'activité du cryptage de la mémoire (3) des résultats des étapes de procédé suivantes sont en outre inclus :
- envoi (S6) de premières données de test à l'au moins une zone de mémoire de la mémoire (3),
- mise en mémoire (S7) de secondes données de test dans l'au moins une zone de mémoire, dans lequel les secondes données de test représentent une variante des premières données de test,
- lecture (S8) des secondes données de test par l'au moins une zone de mémoire et
- comparaison (S9) des premières données de test et des secondes données de test.

2. Procédé selon la revendication 1, dans lequel la mémoire (3) est configurée en tant que :
- mémoire de code de programme,
- mémoire de configuration,
- unité de mémoire flash,
- mémoire de travail,
- mémoire vive (RAM),
- mémoire vive dynamique (DRAM),
- mémoire vive statique (SRAM),
- mémoire vive magnétorésistive (MRRAM),
- mémoire vive résistive (ReRAM) ou
- mémoire à changement de phase (PCM).

3. Procédé selon l'une quelconque des revendications précédentes, dans lequel l'au moins une grandeur physique comprend :
- une durée du traitement de l'accès (S1) à l'au moins une zone de mémoire de la mémoire (3),
- une latence de l'au moins un accès (S1),
- une consommation de courant lors de l'au moins un accès,
- une évolution de température du processeur (2) lors de l'au moins un accès (S1),
- une adaptation de niveaux de tension du processeur (2),
- une adaptation d'une fréquence de signaux d'horloge du processeur (2) et/ou
- un rayonnement électromagnétique lors de l'au moins un accès (S1).

4. Procédé selon l'une quelconque des revendications précédentes, avec l'étape supplémentaire (S3) suivante :
- détermination de l'au moins une valeur de consigne ou
- appel de l'au moins une valeur de consigne.

5. Procédé selon l'une quelconque des revendications précédentes, dans lequel l'au moins une valeur de consigne est déterminée par le biais :
- d'au moins un accès à au moins une seconde zone de mémoire de la mémoire (3), dans lequel la seconde zone de mémoire est décryptée et/ou
- d'une mesure au niveau d'une seconde machine virtuelle.

6. Procédé selon l'une quelconque des revendications précédentes, dans lequel la comparaison des premières données de test et des secondes données de test est effectuée par le biais d'un composant de surveillance de la mémoire (5).

7. Procédé selon l'une quelconque des revendications précédentes, avec les étapes suivantes (S10) :
- émission d'un signal d'alarme,
- émission d'un message d'erreur,
- terminaison d'une application,
- empêchement du démarrage d'une application,
- interruption d'une communication réseau,
- limitation d'une communication réseau,
- déclenchement d'un redémarrage de système,
- suppression de données dans la mémoire,
- limitation d'un accès à des données et/ou
- fin d'un accès à des données,
en particulier au cas où les premières données de test concordent avec les secondes données de test.

8. Procédé selon l'une quelconque des revendications précédentes, dans lequel la zone de mémoire présente une interface par le biais de laquelle les secondes données de test peuvent être lues.

9. Procédé selon l'une quelconque des revendications précédentes, dans lequel le processeur (2) est configuré en tant que :
- processeur programmable par logiciel,
- processeur avec circuit numérique reconfigurable,
- processeur avec FPGA intégré ou
- moteur d'inférence d'IA.

10. Procédé selon l'une quelconque des revendications précédentes, dans lequel le processeur (2) est présenté par un appareil technique (1), dans lequel l'appareil technique (1) est configuré en tant que :
- appareil de commande,
- appareil d'un environnement de l'Internet des objets,
- serveur en périphérie de l'IoT,
- appareil de cryptage et/ou
- module de sécurité du matériel.

11. Procédé selon l'une quelconque des revendications précédentes, dans lequel les étapes du procédé (S1 à S9 ou S10) sont répétées :
- à un moment déterminé au préalable,
- à des moments sélectionnables manuellement,
- lors du démarrage du processeur (2) ou de la machine virtuelle,
- lors du démarrage et/ou de la durée d'exécution d'une application, avant que des données sensibles soient traitées et/ou
- à des intervalles de temps périodiques.

12. Appareil (1) présentant un processeur (2), dans lequel l'appareil (1) est configuré pour exécuter un procédé destiné à la détermination d'une activité d'un cryptage d'une mémoire (3) du processeur (2) selon l'une quelconque des revendications précédentes.

13. Produit de programme informatique, comprenant un programme informatique, dans lequel le programme informatique peut être chargé dans un dispositif de mémoire d'une unité de calcul, dans lequel les étapes d'un procédé selon l'une quelconque des revendications 1 à 11 sont exécutées avec le programme informatique lorsque le programme informatique est exécuté sur l'unité de calcul.

14. Support lisible par ordinateur, sur lequel un programme informatique est mis en mémoire, dans lequel le programme informatique peut être chargé dans un dispositif de mémoire d'une unité de calcul, dans lequel les étapes d'un procédé selon l'une quelconque des revendications 1 à 11 sont exécutées avec le programme informatique lorsque le programme informatique est exécuté sur l'unité de calcul.
